# EUROPÄISCHE PATENTSCHRIFT

(11) **EP 2 116 374 B1**
(45) Veröffentlichungstag und Bekanntmachung des Hinweises auf die Patenterteilung: **23.03.2011**
(21) Anmeldenummer: 08156009.6
(22) Anmeldetag: 09.05.2008
(51) Int. Cl.: B41F 13/00, B41F 13/42, B41F 33/00, F16P 1/02

(54) **Vorrichtung zur Abdeckung einer Maschine in einer aus mehreren Maschinen gebildeten Verarbeitungslinie**
Device to cover a machine in a processing line made up of several machines
Dispositif de carrénage d'une machine dans une ligne de traitement formée de plusieurs machines

(43) Veröffentlichungstag der Anmeldung: 11.11.2009
(73) Patentinhaber: Müller Martini Holding AG, 6052 Hergiswil (CH)
(72) Erfinder: Kunz, Simon, 8413 Neftenbach (CH)

(56) Entgegenhaltungen:
- GB-A- 2 288 861
- GB-A- 2 304 632

## Beschreibung

Die Erfindung betrifft eine Vorrichtung zur Abdeckung einer Einrichtung oder Maschine, vorzugsweise in einer aus mehreren Maschinen gebildeten Verarbeitungslinie zur Herstellung von Druckerzeugnissen, die eine oberhalb der Maschine angeordnete und an einem Maschinengestell befestigte Abdeckvorrichtung aufweist, die mittels Scharnier in eine Offen- oder Schliessstellung schwenkbar ist.

Druckvorprodukte, wie Druckbogen, Umschläge, Karten oder Beilagen werden in Anlagen der Druckweiterverarbeitung zu fertigen Druckerzeugnissen verarbeitet. Dabei müssen üblicherweise an den Druckvorprodukten mehrere Bearbeitungen mittels unterschiedlicher Maschinen vorgenommen werden. Es ist sinnvoll, nach der Zuführung der Druckvorprodukte in die Maschinen, möglichst alle Bearbeitungen, die zum fertigen Druckerzeugnis führen, automatisch nacheinander vorzunehmen. Dies führt dazu, dass mehrere Maschinen zu einer Anlage verkettet werden, der die Druckvorprodukte zugeführt, in einem seriellen Förderstrom von Maschine zu Maschine gefördert und in den Maschinen bearbeitet werden. Der daraus folgende linienartige Aufbau einer solchen Anlage beschränkt den Zugang zu den Maschinen auf zwei, üblicherweise sich gegenüberliegende Seiten, weil je eine Seite für die Zufuhr und Wegfuhr der Druckvorprodukte vorgesehen sind. Durch die Förderung der Druckvorprodukte und deren Bearbeitung in den Maschinen ergeben sich in einer Anlage gefährliche Stellen, die aus Gründen der Arbeitssicherheit während dem Betrieb, mittels Abdeckvorrichtungen abzudecken sind. Andererseits muss für Einstell- oder Wartungsarbeiten ein möglichst freier Zugang zu den Bearbeitungseinrichtungen der Maschinen verfügbar sein.

Nach einem ersten Stand der Technik sind als Schiebetüren ausgebildete Abdeckvorrichtungen bekannt, die sich in Längsresp. Förderrichtung der Druckvorprodukte auf mit dem Maschinengestell verbundenen Schienen verschieben lassen. Vorteilhaft an derartigen Vorrichtungen ist die gleichzeitige Zugänglichkeit an zwei sich gegenüberliegenden Seiten. Nachteilig ist, dass gleichzeitig nur ein beschränkter Bereich der Maschine frei zugänglich sein kann, weil der restliche Teil durch verschobene Schiebetüren abgedeckt bleibt.

Nach einem weiteren Stand der Technik sind als einteilige Schwenkhauben ausgebildete Abdeckvorrichtungen bekannt, die um eine zur Förderrichtung der Druckvorprodukte parallele Achse schwenkbar am Maschinengestell gelagert sind. Diese Vorrichtungen sind so gestaltet, dass bei geöffneter Verschalung ein möglichst grosser Bereich auf der ganzen Länge der Maschine zugänglich wird, wobei als Nachteil die gegenüberliegende Seite absolut unzugänglich bleibt.

Nach einem weiteren Stand der Technik sind als zweiteilige Schwenkhauben ausgebildete Abdeckvorrichtungen bekannt, die um wenigstens eine zur Förderrichtung der Druckprodukte parallele Achse schwenkbar am Maschinengestell gelagert sind. Die Schwenkachse kann dabei oberhalb der Maschine in einem mittleren Bereich angeordnet sein, womit die beiden Hauben zum Öffnen gegeneinander schwenkbar sind, als auch seitlich am Maschinengestell zu den Bedienungsseiten gerichtet, womit die Hauben zum Öffnen voneinander weg schwenkbar sind. Diese Art von Schwenkhauben hat den Nachteil, dass sie von einer Seite nicht bedienbar sind, resp. dass ein freier Zugang von zwei sich gegenüberliegenden Seiten zu den inneren Komponenten der Maschinen nicht oder nur beschränkt möglich ist.

In der EP 1 291 140 B1 wird weiter eine Abdeckhaube vorgeschlagen, die am Gehäuse der Maschine schwenkbar befestigt ist und in der Abdeckhaube eine weitere Abdeckhaube vorgesehen ist, die schwenkbar an der Abdeckhaube befestigt ist. Derart gestaltete Vorrichtungen ermöglichen zwar einen wahlfreien Zugang von zwei Seiten, der jedoch von einer Seite nur eingeschränkt möglich ist.

Die GB2304632A offenbart eine Schutzabdeckung an Druckmaschinen zum Abdecken eines Druckwerks oder eines Lackierwerks, die aus zwei Seitenteilen und einem oberen Teil besteht. Die beiden Seitenteile sind mit dem oberen Teil gelenkig verbunden, wobei in geschlossenem Zustand die beiden Seitenteile zwischen den Maschinenseitengestellen senkrecht und das obere Teil waagrecht angeordnet sind. Der Rahmen der Schutzabdeckung ist mit einer Seite an einer oberen Ecke jedes Maschinenseitengestells schwenkbar gelagert und trägt an seiner anderen Seite das obere Teil und das eine Seitenteil, die unabhängig voneinander schwenkbar sind.

Es ist somit Aufgabe der Erfindung, eine Vorrichtung zur Abdeckung einer Einrichtung oder Maschine, vorzugsweise in einer aus mehreren Maschinen gebildeten Verarbeitungslinie zu schaffen, die wahlweise einen freien Zugang von einer Bedienungsseite oder der ihr gegenüberliegenden Bedienungsseite zu den Maschinen ermöglicht.

Erfindungsgemäss wird diese Aufgabe dadurch gelöst, dass die Abdeckvorrichtung an zwei gegenüberliegenden Bedienungsseiten jeweils ein mit dem Maschinengestell verbundenes Scharnier mit parallel verlaufenden Schwenkachsen aufweist, von denen jeweils das andere als das die Schwenkachse zum Öffnen der Ab-deckvorrichtung bildende Scharnier als von der Funktion auflösbares Scharnier ausgebildet ist.

Anschliessend wird die Vorrichtung unter Bezugnahme auf die Zeichnung, auf die bezüglich aller in der Beschreibung nicht erwähnten Einzelheiten verwiesen wird, anhand von Ausführungsbeispielen erläutert. In der Zeichnung zeigen:
- Fig. 1: eine Maschine einer Verarbeitungslinie mit geschlossener Abdeckvorrichtung,
- Fig. 2: die Maschine nach Fig.1 mit nach der hin- teren Bedienungsseite geöffneten Abdeck- vorrichtung,
- Fig. 3: die Maschine nach Fig.1 mit nach der vor- deren Bedienungsseite geöffneten Abdeck- vorrichtung,
- Fig. 4: einen vergrösserten Ausschnitt A aus der Fig.1 mit einem Scharnier in einer ersten Ausführungsform mit einer Lagerwelle mit zwei Ausstellflächen,
- Fig. 5: das Scharnier nach Fig. 4 in aufgelöster Stellung,
- Fig. 6: einen Querschnitt durch das Scharnier nach Fig. 4 in entriegelter Stellung,
- Fig. 7: einen Querschnitt durch das Scharnier nach Fig. 4 in verriegelter Stellung,
- Fig. 8: einen Querschnitt durch ein Scharnier mit einer Lagerwelle mit einer Ausstellfläche in entriegelter Stellung,
- Fig. 9: einen Querschnitt durch das Scharnier nach Fig. 8 in verriegelter Stellung,
- Fig. 10: einen Querschnitt durch eine Maschine mit Scharnieren einer zweiten Ausführungsform und
- Fig. 11: eine Draufsicht in Schnittdarstellung ei- ner Maschine mit Scharnieren einer drit- ten Ausführungsform.

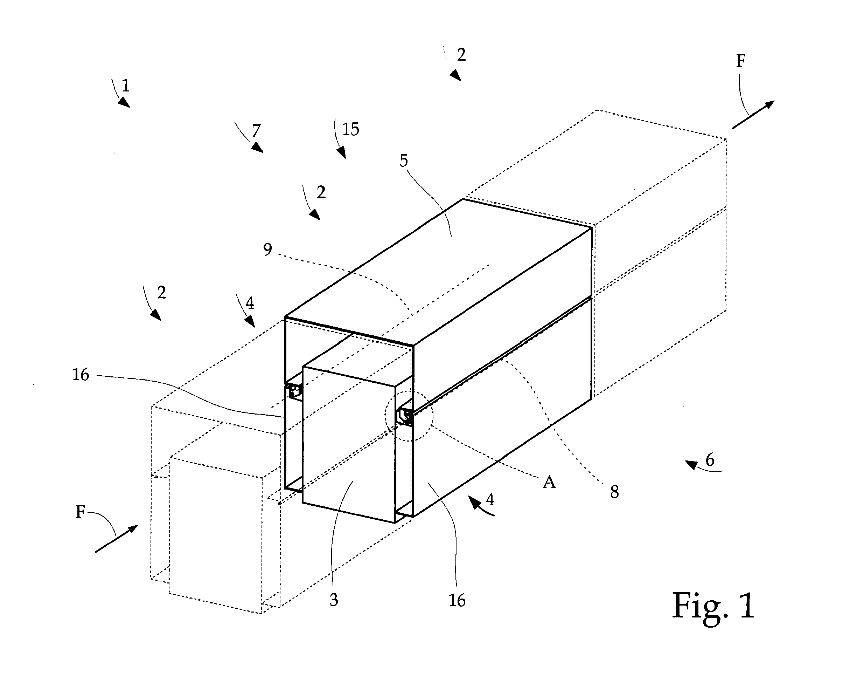

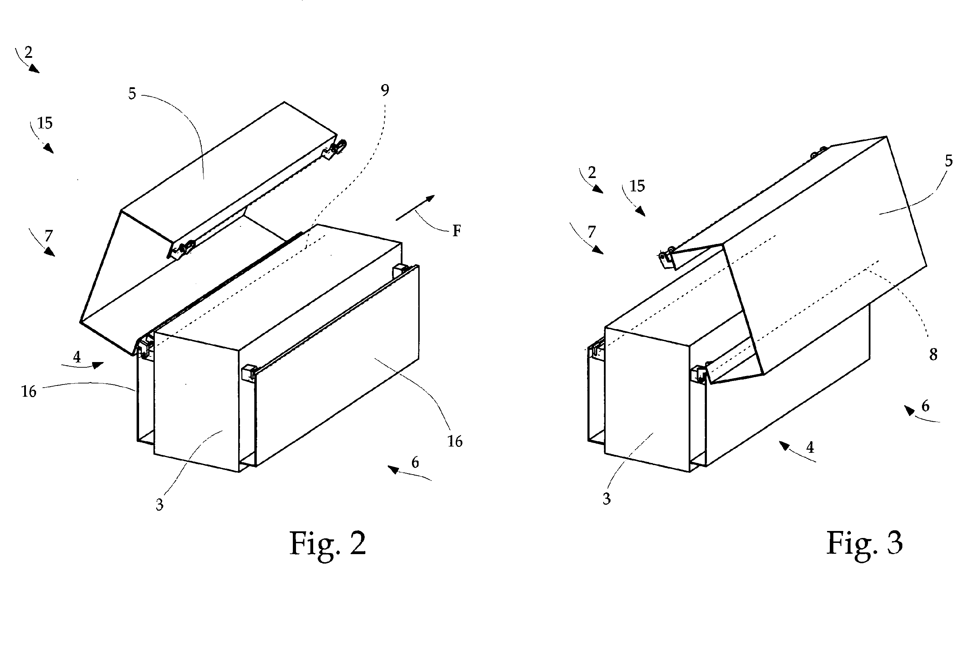

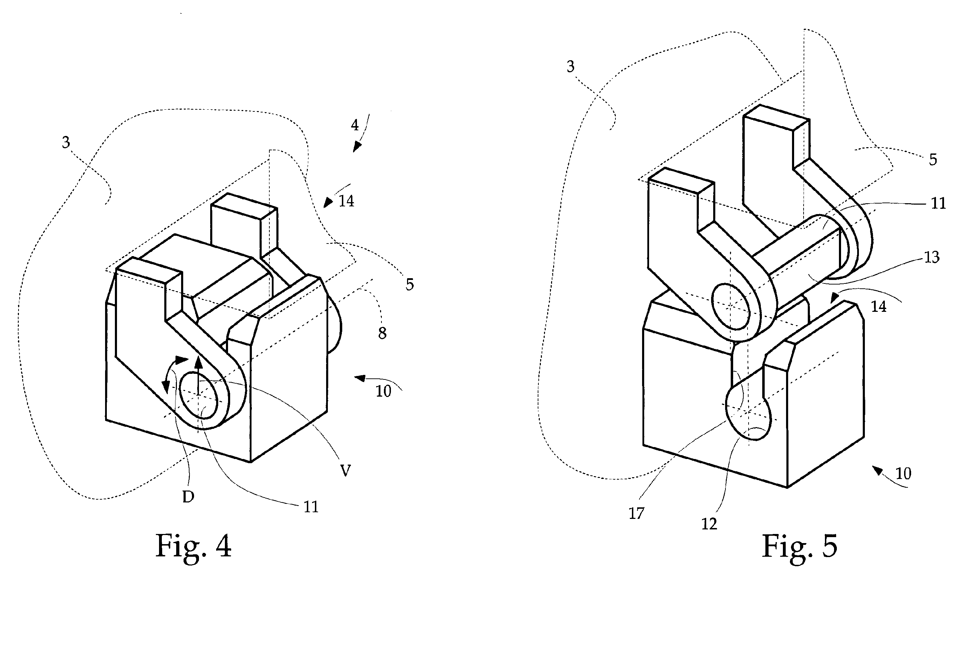

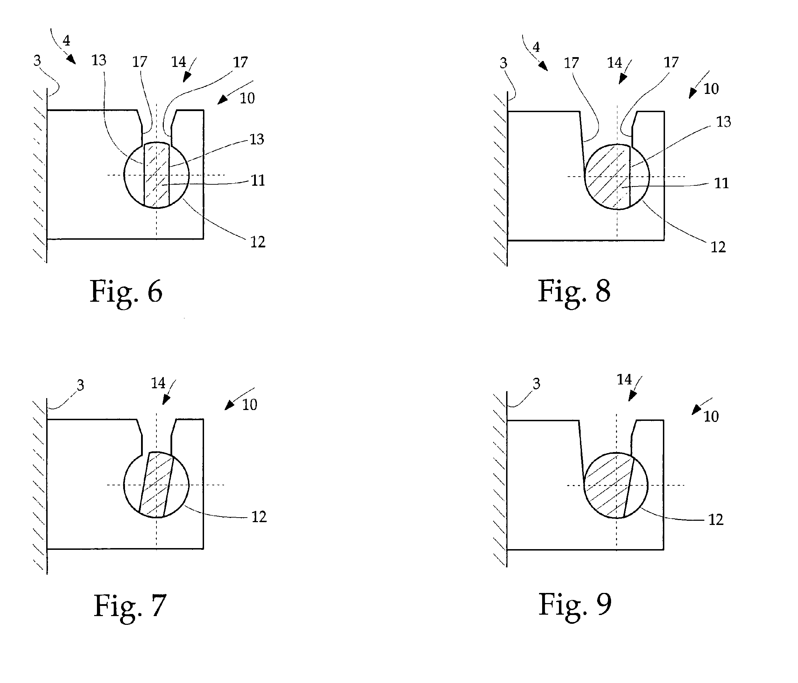

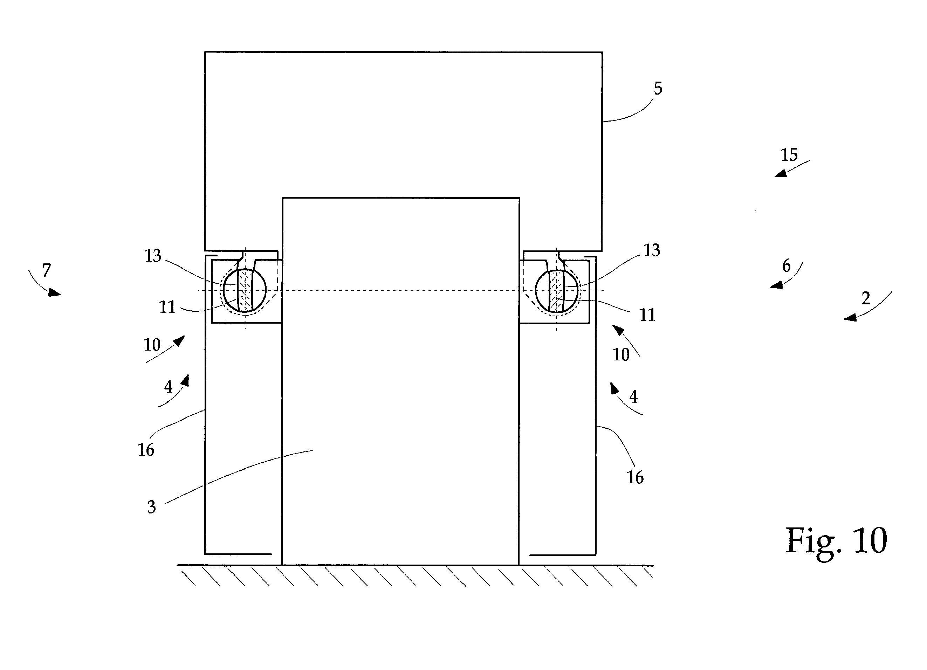

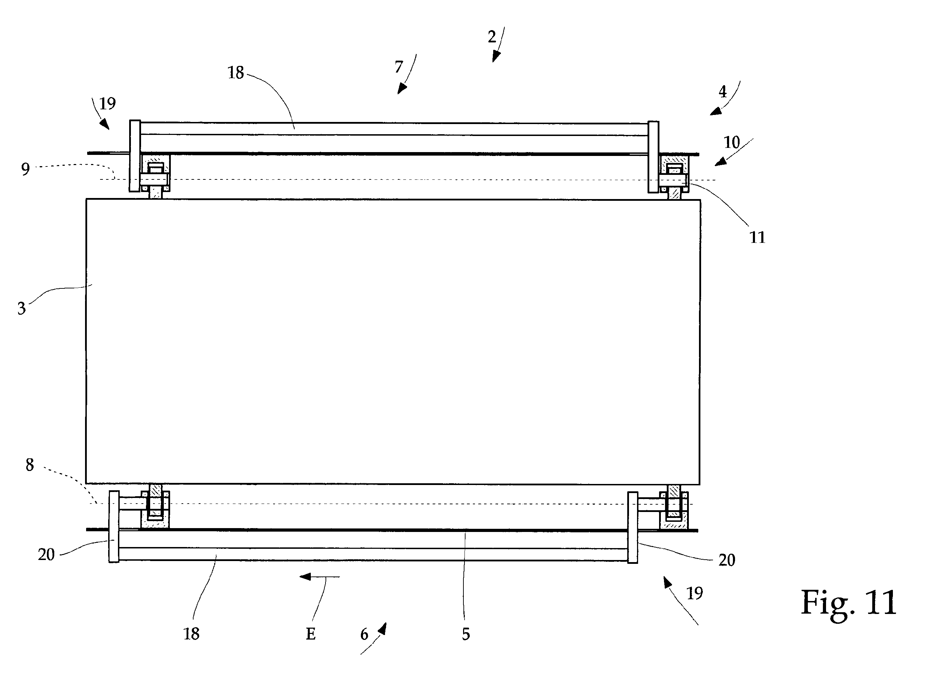

Fig. 1 zeigt einen Abschnitt einer aus mehreren Maschinen 2 gebildeten Verarbeitungslinie 1 zur Herstellung von Druckerzeugnissen. Die Druckerzeugnisse werden in Förderrichtung F durch die Verarbeitungslinie 1 gefördert und während der Förderung in den Maschinen 2 bearbeitet. Jede Maschine 2 weist ein Maschinengestell 3 auf, auf dem Bearbeitungseinrichtungen angeordnet sind und Verschalungen 15, die durch am Maschinengestell 3 befestigte Abdeckungen 16 und mittels Scharnier 4 schwenkbar befestigte Abdeckvorrichtungen 5 gebildet sind. Die Abdeckvorrichtung 5 ist oberhalb der Maschine 2 angeordnet und mittels auf der vorderen Bedienungsseite 6 und der gegenüberliegenden hinteren Bedienungsseite 7 mit dem Maschinengestell 3 verbundenen Scharnieren 4 um eine parallel verlaufende vordere Schwenkachse 8 oder eine hintere Schwenkachse 9 in eine Offen- oder Schliessstellung schwenkbar, wobei die Abdeckvorrichtung 5 vom jeweils anderen als dem die Schwenkachse 8,9 zum Öffnen der Abdeckvorrichtung 5 bildenden Scharnier 4 als von der Funktion auflösbares Scharnier 4 ausgebildet ist. In einer ersten, in den Fig. 4 bis Fig. 9 dargestellten Ausführungsform wird das Scharnier 4 gebildet durch wenigstens eine parallel zur Schwenkachse 8,9 verlaufende, kreissegmentartig ausgebildete, wenigstens eine Ausstellfläche 13 aufweisende Lagerwelle 11 und ein Lager 10, wobei das Scharnier in radialer Richtung auflösbar ausgebildet ist. Das Lager 10 weist eine in die Lagerbohrung 12 mündende, verengte, wenigstens die Weite der Lagerwelle 11 im Bereich der Ausstellfläche 13 aufweisende Einführöffnung 14 auf, wobei Lagerwelle 11 und Lager 10 relativ zueinander verstellbar sind. Bei geschlossener Abdeckvorrichtung 5 sind die Achsen der Lagerwellen 11 mit den Schwenkachsen 8,9 deckungsgleich. Nach Fig. 4 sind die Lagerwellen 11 in dieser Lage sowohl drehbar nach dem Drehrichtungspfeil D oder verschiebbar nach dem Verschieberichtungspfeil V im Lager 10 gelagert, resp. entriegelt. Dieser Zustand ist in Fig. 6 detailliert dargestellt. Nach einer kleinen Verdrehung der Lagerwelle 11 im Lager 10, nach Fig. 7, ist die Lagerwelle 11 im Lager 10 verriegelt und kann nur noch Drehbewegungen in Richtung des Drehrichtungspfeils D ausführen. Beim Schwenken der Abdeckvorrichtung 5 um eine Schwenkachse 8,9 bewegt sich die Lagerwelle 11 auf der gegenüberliegenden Seite auf einer Kreisbahn. Die durch ebene Flächen 17 gebildete Einführöffnung 14 ist derart gestaltet, dass beim Schwenken um die vordere Schwenkachse 8 oder die hintere Schwenkachse 9, die jeweils gegenüberliegende, sich auf einer Kreisbahn bewegende Lagerwelle 11 nicht mit dem Lager 10 kollidiert. Bei einer vorteilhaften Gestaltungsvariante sind die Flächen 17 senkrecht oder derart geneigt angeordnet, dass die Weite der Einführöffnung 14 gegen oben zunimmt, womit die Abdeckvorrichtung 5 bei aufgelösten Scharnieren 4 von dem Maschinengestell 3 nach oben abhebbar ist. In einer zweiten Ausführungsform nach Fig. 10 ist die Abdeckvorrichtung 5 so ausgebildet, dass sie bei aufgelösten Scharnieren 4 von dem Maschinengestell 3 nicht abhebbar ist, wobei wenigstens die Lagerwellen 11 gekrümmte Ausstellflächen 13 aufweisen. In den Fig. 1 bis Fig. 11 ist die Lagerwelle 11 als mit der Abdeckvorrichtung 5 und das Lager 10 als mit dem Maschinengestell 3 verbunden dargestellt. Für die Funktion der erfindungsgemässen Vorrichtung ist dies nicht wesentlich. Alternativ können die Lagerwelle 11 mit dem Maschinengestell 3 und das Lager 10 mit der Abdeckvorrichtung 5 verbunden sein. Ebenso unwesentlich ist, ob ein Scharnier 4 durch eine lange Lagerwelle 11 und ein entsprechend langes Lager 10 oder mehrere kurze Lagerwellen 11 und Lager 10 gebildet wird. Es ist sogar denkbar, eine lange Lagerwelle 11 mit einer Mehrzahl kurzer Lager 10 zu kombinieren. Durch die erwähnten Gestaltungsmerkmale können weitere Funktionen geschaffen werden, wie beispielsweise Unverwechselbarkeit zwischen Abdeckvorrichtungen 5 einer Mehrzahl von Maschinen 2 einer Verarbeitungslinie 1 oder nur eine Befestigungsmöglichkeit der Abdeckvorrichtung 5 an der Maschine 2, für welche diese bestimmt ist. Für die Erfindung ist auch nicht wesentlich, ob die Grundform von Lagerwelle 11 und Lagerbohrung 12 ein Zylinder ist. Denkbar sind beispielsweise auch Lagerwellen 11 mit Ausstellflächen 13, die durch mehrere koaxiale Zylinder mit unterschiedlichen Durchmessern, durch Kegel oder Kugeln gebildet sind. In einer vereinfachten Form kann die Lagerwelle 11 einen kreisrunden Querschnitt ohne Ausstellflächen 13 aufweisen, wobei die Weite der Einführöffnung 14 mindestens dem Durchmesser der Lagerwelle 11 entsprechen muss, womit die Verriegelungsfunktion entfällt. Gemäss einer weiteren Ausführungsform, nach Fig. 11, ist das Scharnier 4 in axialer Richtung auflösbar ausgebildet. Das Lager 10 weist zylindrische Lagerbohrungen 12 auf, in die die Lagerwellen 11 durch axiales Verschieben ein- und ausfahrbar sind. Alternativ können Lager 10 und Lagerwelle 11 auch kegelförmig ausgebildet sein. Eine separate Einführöffnung 14 ist nicht erforderlich, sondern wird durch die Lagerbohrung 12 selbst gebildet. Die Lagerwellen 11 sind an in Führungen 19 der Abdeckvorrichtung 5 geführten und im Beispiel durch einen Griff 18 miteinander verbundenen Haltern 20 axial verschiebbar gelagert. Bei geschlossener Abdeckvorrichtung 5 sind die Lagerwellen 11 in die Lagerbohrungen 12 eingeführt und die Abdeckvorrichtung 5 formschlüssig in den Lagerbohrungen 12 fixiert. Zum Öffnen der Abdeckvorrichtung 5 auf der vorderen Bedienungsseite 6 kann durch Verschieben der Lagerwellen 11 in Entriegelungsrichtung E der Formschluss aufgehoben und die Abdeckvorrichtung 5 anschliessend um die hintere Schwenkachse 9 geschwenkt werden. Durch nicht gezeichnete Federn können die Lagerwellen 11 gegen die Entriegelungsrichtung E vorgespannt werden. Analog kann die Abdeckvorrichtung 5 auf der hinteren Bedienungsseite 7 um die vordere Schwenkachse 8 geöffnet werden. Werden an der vorderen Bedienungsseite 6 und der hinteren Bedienungsseite 7 die Scharniere gleichzeitig aufgelöst, ist die Abdeckvorrichtung 5 vollständig vom Maschinengestell 3 entfernbar. Es ist unter Beibehaltung der Funktionalität ebenfalls denkbar, die Lagerwellen 11 verschiebbar am Maschinengestell 3 zu lagern die Lager 10 an der Abdeckvorrichtung 5 anzuordnen.

## Patentansprüche

1. Vorrichtung zur Abdeckung einer Einrichtung oder Maschine (2), vorzugsweise in einer aus mehreren Maschinen (2) gebildeten Verarbeitungslinie (1) zur Herstellung von Druckerzeugnissen, die eine oberhalb der Maschine (2) angeordnete und an einem Maschinengestell (3) befestigte Abdeckvorrichtung (5) aufweist, die mittels Scharnier (4) in eine Offen- oder Schliessstellung schwenkbar ist, wobeidie Abdeckvorrichtung (5) an zwei gegenüberliegenden Bedienungsseiten (6,7) jeweils ein mit dem Maschinengestell (3) verbundenes Scharnier (4) aus Lager (10) und Lagerwelle (11) mit parallel verlaufenden Schwenkachsen (8,9) aufweist, von denen jeweils das andere als das die Schwenkachse (8,9) zum Öffnen der Abdeckvorrichtung (5) bildende Scharnier (4) als von der Funktion auflösbares Scharnier (4) ausgebildet ist, **dadurch gekennzeichnet, dass** die Lagerwelle (11) kreissegmentartig ausgebildet ist und wenigstens eine zur Schwenkachse (8,9) parallel verlaufende Ausstellfläche (13) aufweist und das Lager (10) eine in die Lagerbohrung (12) mündende verengte, wenigstens die Weite der Lagerwelle (11) im Bereich der Ausstellfläche (13) aufweisende Einführöffnung (14) besitzt.

2. Vorrichtung nach Anspruch 1, **dadurch gekennzeichnet, dass** Lagerwelle (11) und Lager (10) relativ zueinander verstellbar sind.

3. Vorrichtung nach Anspruch 2, **dadurch gekennzeichnet, dass** das Scharnier (4) in radialer Richtung auflösbar ausgebildet ist.

4. Vorrichtung nach Anspruch 2, **dadurch gekennzeichnet**, das das Scharnier (4) in axialer Richtung auflösbar ausgebildete ist.

5. Vorrichtung nach einem der Ansprüche 1 bis 4, **dadurch gekennzeichnet, dass** die Lagerwelle (11) mit der Abdeckvorrichtung (5) oder dem Maschinengestell (3) verbunden ist.

6. Vorrichtung nach einem der Ansprüche 1 bis 5, **dadurch gekennzeichnet, dass** die Abdeckvorrichtung (5) bei aufgelösten Scharnieren (4) von dem Maschinengestell (3) abhebbar ist.

7. Vorrichtung nach einem der Ansprüche 1 bis 5, wobei die Abdeckvorrichtung (5) so ausgebildet ist, dass sie bei aufgelösten Scharnieren (4) von dem Maschinengestell (3) nicht abhebbar ist, **dadurch gekennzeichnet, dass** die Lagerwellen (11) gekrümmte Ausstellflächen (13) aufweisen.

## Claims

1. An arrangement for covering a device or machine (2), preferably in a processing line (1) comprising a plurality of machines (2), for the production of printed products, said arrangement consisting of a cover (5) which is located above the machine (2) and is fixed to a machine frame (3) and which can be swivelled via a hinge (4) into an open or closed position, the cover (5) having, on each of two opposite operator sides (6, 7), a hinge (4), comprising bearing (10) and bearing shaft (11), attached to the machine frame (3), said hinges (4) having parallel swivelling axes (8, 9) and in each case the other hinge (4) not forming the swivelling axis (8, 9) for opening the cover arrangement (5) is configured as a hinge (4) which is detachable by said action,
**characterized in that** the bearing shaft (11) is formed in the shape of a segment of a circle and has at least one detachment surface (13) extending parallel to the swivelling axis (8, 9), and the bearing (10) has a tapered feed-in opening (14) which extends into the bearing bore (12) and is at least as wide as the bearing shaft (11) in the region of the detachment surface (13).

2. An arrangement according to Claim 1, **characterized in that** bearing shaft (11) and bearing (10) can be displaced relative to one another.

3. An arrangement according to Claim 2, **characterized in that** the hinge (4) is designed to be detachable in radial direction.

4. An arrangement according to Claim 2, **characterized in that** the hinge (4) is designed to be detachable in axial direction.

5. An arrangement according to one of Claims 1 to 4, **characterized in that** the bearing shaft (11) is attached to the cover arrangement (5) or the machine frame (3).

6. An arrangement according to one of Claims 1 to 5, **characterized in that**, on detachment of the hinges (4), the cover arrangement (5) can be removed from the machine frame (3).

7. An arrangement according to one of Claims 1 to 5, in which case the cover arrangement (5) is formed in such a way that, on detachment of the hinges (4), it cannot be removed from the machine frame (3), **characterized in that** the bearing shafts (11) have curved detachment surfaces (13).

## Revendications

1. Dispositif pour le carénage d'un équipement ou d'une machine (2), de préférence dans une ligne de traitement (1) constituée de plusieurs machines (2) pour la fabrication de produits imprimés, qui présente un dispositif de carénage (5), disposé au-dessus de la machine (2) et fixé à un bâti de machine (3), qui peut être pivoté dans une position ouverte ou fermée au moyen d'une charnière (4), sachant que le dispositif de carénage (5) présente, sur chacun de deux côtés opposés de manoeuvre (6, 7), une charnière respective (4) reliée au bâti de machine (3) et constituée d'un palier (10) et d'un arbre de palier (11), les charnières (4) ayant des axes de pivotement (8, 9) s'étendant en parallèle et la charnière respective (4) autre que celle formant l'axe de pivotement (8, 9) pour ouvrir le dispositif de carénage (5) étant conçue détachable du fonctionnement, **caractérisé en ce que** l'arbre de palier (11) est conçu du genre segment de cercle et présente au moins une surface de désengagement (13) s'étendant parallèlement à l'axe de pivotement (8, 9), et le palier (10) possède une ouverture d'introduction rétrécie (14) débouchant dans l'alésage de palier (12) et présentant au moins la largeur de l'arbre de palier (11) dans la région de la surface de désengagement (13).

2. Dispositif selon la revendication 1, **caractérisé en ce que** l'arbre de palier (11) et le palier (10) sont mobiles l'un par rapport à l'autre.

3. Dispositif selon la revendication 2, **caractérisé en ce que** la charnière (4) est conçue détachable en direction radiale.

4. Dispositif selon la revendication 2, **caractérisé en ce que** la charnière (4) est conçue détachable en direction axiale.

5. Dispositif selon l'une des revendications 1 à 4, **caractérisé en ce que** l'arbre de palier (11) est relié au dispositif de carénage (5) ou au bâti de machine (3).

6. Dispositif selon l'une des revendications 1 à 5, **caractérisé en ce que** le dispositif de carénage (5) peut être relevé à l'écart du bâti de machine (3) lorsque les charnières (4) sont détachées.

7. Dispositif selon l'une des revendications 1 à 5, sachant que le dispositif de carénage (5) est conçu de telle sorte qu'il ne peut pas être relevé à l'écart du bâti de machine (3) lorsque les charnières (4) sont détachées, **caractérisé en ce que** les arbres de palier (11) présentent des surfaces de désengagement incurvées (13).
